# EUROPEAN PATENT SPECIFICATION

(11) **EP 0 684 913 B1**
(45) Date of publication and mention of the grant of the patent: **28.08.1996**
(21) Application number: 94906962.9
(22) Date of filing: 21.02.1994
(51) Int. Cl.: B60R 25/10, G08B 13/00, G08B 25/10

(54) **A VEHICLE SECURITY SYSTEM**
FAHRZEUGSICHERUNGSSYSTEM
SYSTEME DE SECURITE DE VEHICULE

(30) Priority: 25.02.1993 GB 9303779
(43) Date of publication of application: 06.12.1995
(73) Proprietor: ROVER GROUP LIMITED, Bickenhill Birmingham B37 7HQ (GB)
(72) Inventor: TALBOT, Kevin, Trevor, Staffordshire WS13 7JJ (GB)
(74) Representative: Wilson, Alan Stuart
(86) International application number: GB9400340
(87) International publication number: WO9419219

(56) References cited:
- DE-C- 3 918 052
- GB-A- 1 595 797
- GB-A- 2 257 552
- US-A- 4 194 201

## Description

The invention relates to vehicle security systems which provide for the remote operation of a vehicle security device.

The remote operation of vehicle door locks and engine immobilization systems has gained popularity over the last few years and is becoming available on an increasing number of vehicles. A typical remote control arrangement for locking and unlocking a vehicle door takes the form of a hand held transmitter which operates a receiving device in the vehicle. More recently, car thieves have been using electronic devices (known as code grabbing devices) capable of receiving a signal transmitted from a hand held transmitter and recording the signal. The recorded signal can subsequently be used to unlock the vehicle after the user leaves an area where the vehicle is parked.

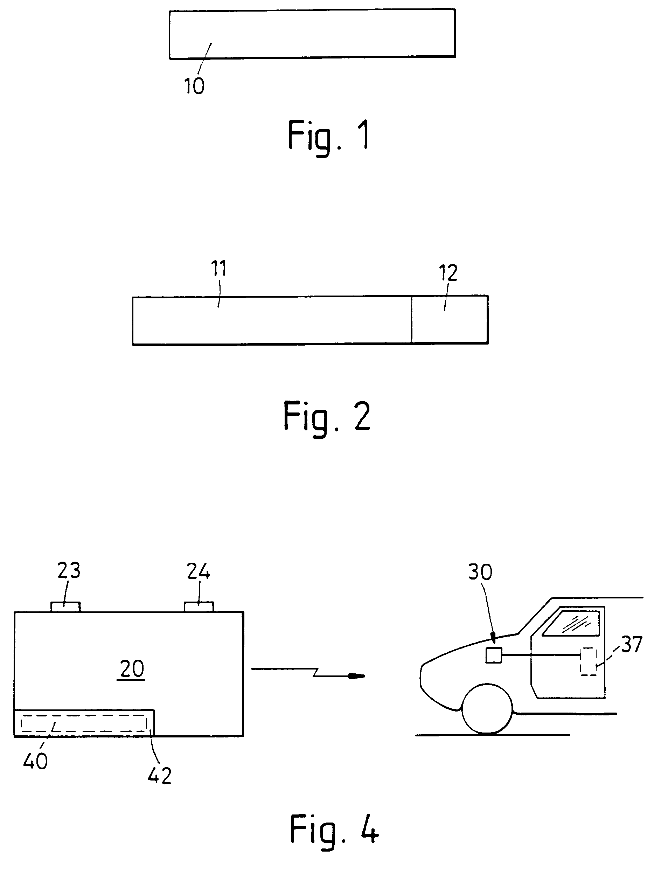

A basic lock/unlock system for a vehicle utilizes a single fixed code 10 as shown in Fig.1 which is transmitted both to lock and unlock the vehicle. It has been found relatively easy to receive and record such a code for subsequent unlocking of the vehicle.

In a slightly more secure system shown in Fig.2, the transmitted signal includes a fixed code 11 and portion in the form of a lock/unlock bit or bits 12. However, once the code 10 has been recorded by a code grabbing device, a thief can change the lock command bit or bits 12 to an unlock command and unlock the vehicle.

Accordingly systems have been designed in which the codes stored in the transmitter and receiver change continually, the transmitter and receiver being arranged to change at the same time and in the same way to remain in synchronism. Such a system is described in GB-A-2257552 which discloses the features of the preambles of claims 1 and 10. However it is a problem with such systems that the transmitter and receiver can gradually drift out of synchronism to such an extent that the transmitted signal is not accepted by the receiver.

An object of the present invention is to provide a system in which the gradual loss of synchronism between the stored codes in the transmitter and receiver does not affect the operation of the system.

According to the present invention there is provided a vehicle security system including a security device, a transmitter for transmitting command signals, the transmitter including code generator means operable to provide a code forming at least part of said transmitted signal, the code being automatically changeable at intervals, and a receiver which receives the transmitted signal and causes operation of the security device, the receiver including code generating means operable to provide a code associated with or related to the transmitted code to facilitate operation of the security device, the code in the receiver being automatically changeable at intervals substantially in synchronism with the timing of code changes in the transmitter, wherein one of the transmitter and the receiver provides a tolerance which increases with time lapse to accommodate a gradual desynchronization between the timing of code changes over a period of time.

Preferably, operation of the transmitter within range of the receiver will re-synchronize the timing of the code changes in the transmitter and receiver. It is proposed to use a clock such as a crystal clock in the transmitter and preferably also in the receiver which would normally remain in synchronism for several days following the last operation of the transmitter. The clocks will provide timing accuracy between the transmitter and receiver. However, the receiver may be arranged to provide a tolerance which is effectively zero at synchronism and which increases with time lapse between transmitter operations. In that way, the intelligence in the receiver enables it to open up a window of allowable timing error in the synchronization of code changes if the receiver has not received a signal from the transmitter for a number of days or weeks.

If synchronism has been entirely lost, for example, due to battery failure in the transmitter, means may be provided for producing a re-synchronizing signal for bringing the coding in the transmitter and receiver back into synchronism. It is highly desirable that such a re-synchronizing signal is not transmitted accidentally when, for example, leaving the vehicle as the re-synchronizing signal could be of use to a thief with a code grabbing device. To reduce the risk of accidentally producing a re-synchronizing signal, the re-synchronizing means may be operated by a battery compartment cover on the transmitter.

The code generator for the transmitter may be a rolling code generator or encryption device and the same preferably applies to the receiver.

If desired the transmitted signal may include a portion which provides code changes within the interval at determined times. Such a portion of the transmitted signal may provide changes in code at regular intervals.

The present invention also provides a vehicle security system comprising a security device, a transmitter for transmitting command signals, the transmitter including code generator means operable to provide a code forming at least part of said transmitted signal, the code being automatically changeable at intervals, and a receiver which receives the transmitted signal and causes operation of the security device, the receiver including code generating means operable to provide a code associated with or related to the transmitted code to facilitate operation of the security device, the code in the receiver being automatically changeable at intervals substantially in synchronism with the timing of code changes in the transmitter, wherein the transmitter and receiver are arranged such that one of them can communicate to the other the length of said intervals to be used.

The communication of the length of the intervals may, for example, take place on the first operation of the transmitter in an initial pairing procedure.

Preferably the length of said intervals varies in time.

The present invention further provides a vehicle security system including a system for remote operation according to the invention.

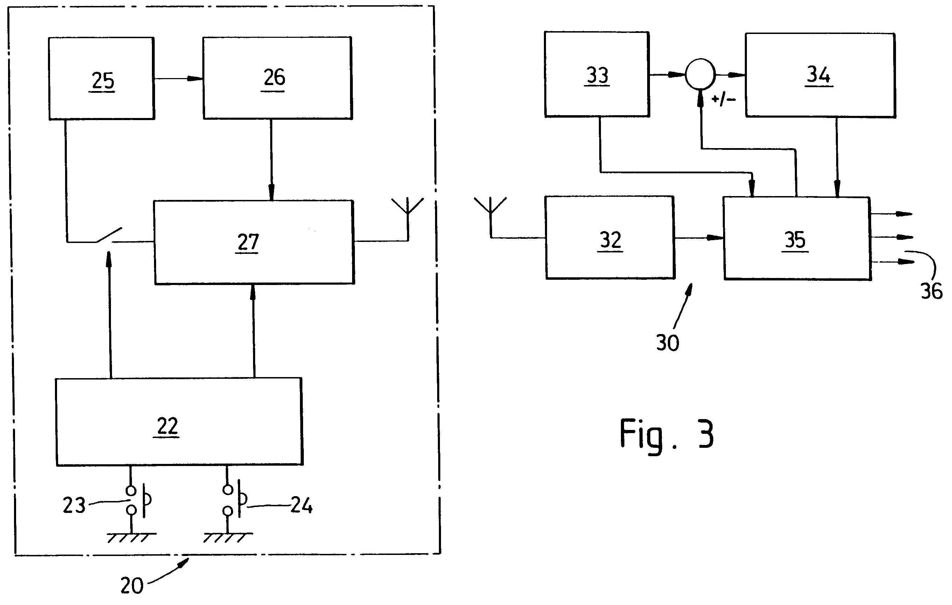

A system for the remote operation of a lock in accordance with the invention will now be described by way of example with reference to the remaining accompanying drawings in which:-
Fig.3 shows a block diagram arrangement of a transmitter and receiver in accordance with the invention
Fig.4 shows a transmitter/receiver arrangement for operating the door of a vehicle in accordance with the present invention,
Fig.5 shows a modified form of transmitted signal,
Fig.6 shows a time scale illustrating part of the modified transmitted signal and
Fig.7.shows a signal used to communicate from the transmitter to the receiver information subsequently used for generating security codes.

A hand held transmitter 20 comprises a control logic 22 operated either by a lock button 23 or an unlock button 24. The transmitter includes a crystal clock 25, a rolling code generator 26 and the control logic and rolling code generator provide inputs for a transmitter circuit 27.

A receiver 30 comprises a receiver circuit 32, a crystal clock 33 a rolling code generator 34 and a control logic 35. The receiver circuit 32, the clock 33, and the rolling code generator 34 provide inputs for the control logic 35, which compares the signals received from the receiver circuit 32 and the code generator 34 and provides outputs 36 for operating vehicle door locks 37 if those signals match each other.

At intervals e.g. every 10 seconds, the code generated by the rolling code generator 26 in the transmitter 20 is changed. Similarly, at the same intervals the code generated by the rolling code generator 34 of the receiver is changed. The clocks 25, 33, starting in synchronism, provide timing accuracy common to the transmitter 20 and receiver 30 for the transmitter and receiver code change operation. The signal transmitted by the transmitter 20 will incorporate the code generated at that time and will either match or be otherwise related to the code generated in the receiver at that time to permit the control logic 35 to produce the output signals 36.

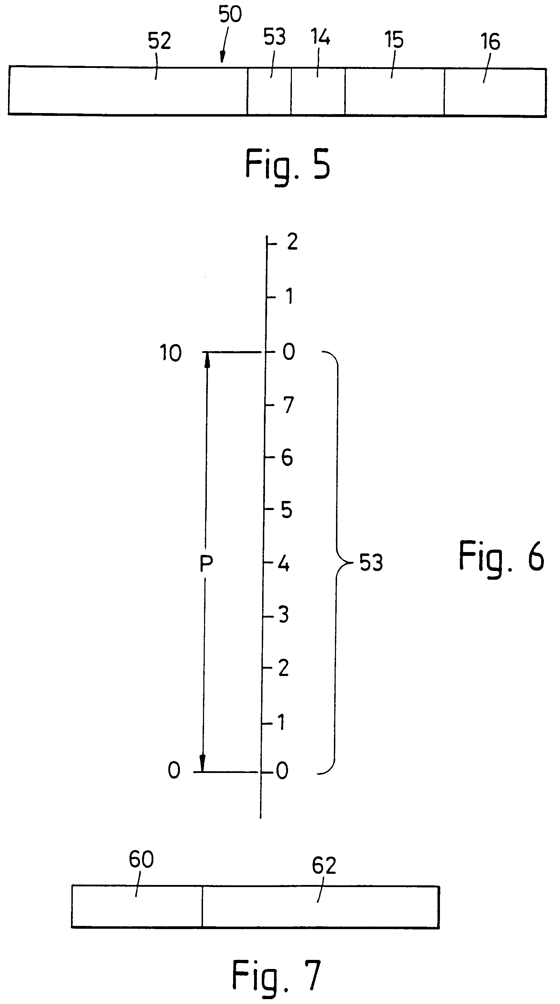

In the simplest form of the invention the intervals are regular, and are of a length, e.g. 10 seconds, which is permanently programmed into the transmitter and receiver. However, in order to increase the security of the system it can be made possible for the length of the intervals to be used to be initially programmed into the transmitter, and to be communicated to the receiver when they are first used together as a pair. This allows the intervals to be of any fixed length. Alternatively the length of each interval can vary from the previous one in accordance with an algorithm, the algorithm and a 'seed' first value being held in the transmitter, and communicated to the receiver when they are first used together as a pair. In a further alternative the length of the intervals can cycle through a sequence or different lengths, the sequence being programmed into the transmitter and communicated to the receiver in the same way. The communication from transmitter to receiver can be brought about by including in the control logic in the transmitter instructions to send the required information on the first operation of the transmitter. A signal for achieving this is shown in Figure 7. The first portion 60 of the signal is a code which would be recognized by the receiver as an instruction to pick up the following information and store it for use in generating codes. The next portion 62 of the signal includes a random sequence of interval lengths which are to be cycled through by the transmitter and receiver. The advantage of pairing up the transmitter and receiver in this way is that each pair can have different values for the seed intervals or different algorithms or sequences of intervals without the need to coordinate the manufacture and supply of the transmitters and receivers.

Because of the accuracy of the crystal clocks 25, 33 it is envisaged that they will remain in synchronism for several days. Nevertheless, each time the lock button 23 or unlock button 24 is pressed, the clocks 25, 33 in the transmitter and receiver will be re-synchronized.

If no signal is received from the transmitter 20 for a long period of time there is a risk that the clocks 25, 33 will move out of synchronism. Therefore, circuitry is included in the control logic 35 of the receiver to enable the receiver to open up a window of allowable timing error. This would allow the door locks to be operated even if the codes in the transmitter and receiver were up to a number of steps out of synchronism, that number increasing with time from the last transmitter operation. Therefore, the allowable error in synchronization will increase with time from the last lock/unlock signal of the transmitter. With such an increasing window of allowable timing error, complete loss of synchronization is unlikely to occur very often. However, if a battery 40 in the transmitter 20 fails and is removed from the transmitter, the re-closing of a battery cover 42 after replacing the battery will cause a re-synchronization signal to be generated by the control logic 22 and transmitted to the receiver 30 which will cause complete re-synchronization of the transmitter and receiver. By using the battery compartment cover 42 in that way, there is little risk that a user of the transmitter will accidentally transmit the re-synchronization signal.

As mentioned above, the rolling codes will change in response to the operation of the clocks 25, 33. An alteration in rolling code requires the processing of an algorithm but a change in code at, say, every 10 seconds can be achieved within the system. However it is envisaged that an astute thief could possibly grab the transmitted code and make use of it in the 10 second period. To reduce the risk of that, it is proposed that each signal 50 (Fig.5) includes not only a rolling code 52 (and, if desired, fixed code bits such as transmitter identification 14, a lock/unlock bit or bits 15 and even a vehicle identification 16) but also a code portion 53 which changes at intervals within the 10 second period P (Fig.6). As shown in Fig.6 the portion 50 changes eight times in the ten second period P on a regular basis (or, if desired a pseudo random basis e.g., 1, 3, 7, 2, 5 etc. within interval P) giving a thief with a grabbing device virtually no time in which to make use of the grabbed signal. This will apply both to the transmitter 20 and the receiver 30. Such an arrangement will help when re-synchronizing the transmitter 20 and the receiver 30 as the point of re-synchronization will be more accurately identified within the main code change cycle or period P. Also with such an arrangement re-synchronization could be achieved by, for example, pressing one of the transmitter buttons 23, 24 a number of times in quick succession which would be recognized by the receiver 30 as a re-synchronizing signal structure.

A further advantage of the present invention is that pressing of the transmitter buttons will have no effect on the content of the rolling code transmitted as the code is changed by operation of the clock 25 and not by the buttons 23, 24. Therefore accidental operation of the lock/unlock buttons will not take the transmitter out of synchronism with the receiver.

Instead of using a rolling code in the transmitter and receiver, the code to be transmitted can be in the form of an encryption algorithm which effectively scrambles the content of the transmitted signal which is then unscrambled in the receiver. Information on public encryption codes is available in text books for example Cryptography; A New Dimension in Computer Data Security by Meyer, C and S. Matys 1982 New York, John Wiley & Sons, Inc.

The term "security device" used herein embraces a lock, alarm, vehicle immobilizes, latch release or similar security device.

## Claims

1. A vehicle security system comprising a security device (37), a transmitter (20) for transmitting command signals, the transmitter (20) including code generator means (26) operable to provide a code forming at least part of said transmitted signal, the code being automatically changeable at intervals, and a receiver (30) which receives the transmitted signal and causes operation of the security device, the receiver (30) including code generating means (34) operable to provide a code associated with or related to the transmitted code to facilitate operation of the security device, the code in the receiver (30) being automatically changeable at intervals substantially in synchronism with the timing of code changes in the transmitter (20), characterized in that one of the transmitter (20) and receiver (30) provides a tolerance which increases with time lapse to accommodate a gradual de-synchronization between the timing of code changes over a period of time.

2. A system according to Claim 1 characterized in that operation of the transmitter (20) within range of the receiver (30) will re-synchronize the timing of code changes in the transmitter (20) and receiver (30).

3. A system according to claim 1 or claim 2 characterized in that means is provided for producing a re-synchronizing signal for re-synchronizing the coding in the transmitter (20) and receiver (30) at such time as synchronism has been lost.

4. A system according to Claim 3 characterized in that the re-synchronizing means is operated by the closing of a battery compartment cover (42) on the transmitter (20).

5. A system according to any preceding Claim characterized in that timer means (25, 33) is provided in each of the transmitter (20) and receiver (30) to provide timing accuracy common to the transmitter (20) and receiver (30).

6. A system according to any preceding Claim characterized in that the code generator in at least one of the transmitter (20) and the receiver (30) is a rolling code generator (26, 34) or an encryption device.

7. A system according to any of Claims 1 to 6 characterized in that the transmitter (20) is a plug-in module.

8. A system according to any of Claims 1 to 10 characterized in that the transmitted signal includes a portion (53) which provides code changes within said intervals at determined times.

9. A system according to Claim 8 characterized in that the portion (53) provides changes in code at regular intervals.

10. A vehicle security system comprising a security device, a transmitter (20) for transmitting command signals, the transmitter (20) including code generator means (26) operable to provide a code forming at least part of said transmitted signal, the code being automatically changeable at intervals, and a receiver (30) which receives the transmitted signal and causes operation of the security device, the receiver (30) including code generating means (34) operable to provide a code associated with or related to the transmitted code to facilitate operation of the security device, the code in the receiver (30) being automatically changeable at intervals substantially in synchronism with the timing of code changes in the transmitter (20), characterized in that the transmitter (20) and receiver (30) are arranged such that one of them can communicate to the other the length of said intervals to be used.

11. A system according to claim 10 wherein the length of said intervals varies in time.

## Patentansprüche

1. Fahrzeugsicherungssystem mit einer Sicherungsvorrichtung (37), einem Sender (20) zum Senden von Befehlssignalen, wobei der Sender (20) ein Codeerzeugungsmittel (26) enthält, welches sich so betätigen läßt, daß es einen Code bereitstellt, welcher zumindest einen Teil des gesendeten Signals bildet, wobei dieser Code in bestimmten Zeitabständen automatisch geändert werden kann; und mit einem Empfänger (30), welcher das gesendete Signal empfängt und den Betrieb der Sicherungsvorrichtung bewirkt, wobei der Empfänger (30) ein Codeerzeugungsmittel (34) enthält, welches sich so betätigen läßt, daß es einen Code bereit stellt, welcher mit dem gesendeten Code verbunden bzw. auf diesen bezogen ist, um den Betrieb der Sicherungsvorrichtung zu erleichtern, wobei der Code im Empfänger (30) in bestimmten Zeitabständen automatisch geändert werden kann, und zwar im wesentlichen in Synchronismus bei der zeitlichen Abfolge von Codeänderungen im Sender (20), dadurch gekennzeichnet, daß der Sender (20) oder der Empfänger (30) eine Toleranz bereitstellt, welche sich mit der verstrichenen Zeit erhöht, um so einer allmählichen Desynchronisierung in der zeitlichen Abfolge von Codeänderungen über einen bestimmten Zeitraum Rechnung zu tragen.

2. System nach Anspruch 1, dadurch gekennzeichnet, daß der Betrieb des Senders (20) in Reichweite des Empfängers (30) die zeitliche Abfolge von Codeänderungen im Sender (20) und im Empfänger (30) resynchronisieren wird.

3. System nach Anspruch 1 oder Anspruch 2, dadurch gekennzeichnet, daß ein Mittel bereitgestellt ist, ein Resynchronisierungssignal zur Resynchronisierung der Codierung im Sender (20) und im Empfänger (30) zu erzeugen, und zwar dann, wenn der Synchronismus verlorengegangen ist.

4. System nach Anspruch 3, dadurch gekennzeichnet, daß das Mittel zur Resynchronisierung durch Schließen einer Batteriefachabdeckung (42) am Sender (20) betätigt wird.

5. System nach einem der vorhergehenden Ansprüche, dadurch gekennzeichnet, daß das Zeitgebermittel (25, 33) jeweils im Sender (20) und im Empfänger (30) bereitgestellt ist, um so eine gemeinsame Zeitgabe im Sender (20) und im Empfänger (30) herzustellen.

6. System nach einem vorhergehenden Anspruch, dadurch gekennzeichnet, daß der Codeerzeuger in zumindest entweder dem Sender (20) oder dem Empfänger (30) ein Erzeuger eines rollierenden Codes (26, 34) oder eine Verschlüsselungsvorrichtung ist.

7. System nach einem der Ansprüche 1 bis 6, dadurch gekennzeichnet, daß es sich beim Sender (20) um ein Einsteckmodul handelt.

8. System nach einem der Ansprüche 1 bis 10, dadurch gekennzeichnet, daß das gesendete Signal einen Abschnitt (53) enthält, welcher zu festgelegten Zeiten innerhalb der erwähnten Zeitabstände für Codeänderungen sorgt.

9. System nach Anspruch 8, dadurch gekennzeichnet, daß der Abschnitt (53) für Codeänderungen in regelmäßigen Zeitabständen sorgt.

10. Fahrzeugsicherungssystem mit einer Sicherungsvorrichtung, einem Sender (20) zum Senden von Befehlssignalen, wobei der Sender (20) ein Codeerzeugungsmittel (26) enthält, welches sich so betätigen läßt, daß es einen Code bereitstellt, welcher zumindest einen Teil des gesendeten Signals bildet, wobei dieser Code in bestimmten Zeitabständen automatisch geändert werden kann; und mit einem Empfänger (30), welcher das gesendete Signal empfängt und den Betrieb der Sicherungsvorrichtung bewirkt, wobei der Empfänger (30) ein Codeerzeugungsmittel (34) enthält, welches sich so betätigen läßt, daß es einen Code bereit stellt, welcher dem gesendeten Code zugeordnet bzw. auf diesen bezogen ist, um den Betrieb der Sicherungsvorrichtung zu erleichtern, wobei der Code im Empfänger (30) in bestimmten Zeitabständen automatisch geändert werden kann, und zwar im wesentlichen in Synchronismus bei der zeitlichen Abfolge von Codeänderungen im Sender (20), dadurch gekennzeichnet, daß der Sender (20) und der Empfänger (30) so eingestellt sind, daß einer von ihnen dem anderen die Länge der zu verwendenden Signale übermitteln kann.

11. System nach Patentanspruch 10, bei welchem die Länge der Zeitabstände mit der Zeit variiert.

## Revendications

1. Système de sécurité de voiture comprenant un dispositif de sécurité (37), un émetteur (20) pour émettre des signaux de commande, l'émetteur (20) comportant un moyen générateur de codes (26) fonctionnant pour fournir un code formant au moins une partie dudit signal émis, le code étant automatiquement modifiable à intervalles, et un récepteur (30) qui reçoit le signal émis et force le fonctionnement du dispositif de sécurité, le récepteur (30) comportant un moyen de génération de codes (34) fonctionnant pour fournir un code associé ou lié au code émis pour faciliter le fonctionnement du dispositif de sécurité, le code dans le récepteur (30) étant automatiquement modifiable à intervalles sensiblement en synchronisme avec la cadence de changements de code dans l'émetteur (20), caractérisé en ce que l'un de l'émetteur (20) et du récepteur (30) fournit une tolérance qui augmente avec le temps pour tenir compte d'une désynchronisation graduelle entre la cadence des changements de code durant une période de temps.

2. Système conformément à la revendication 1, caractérisé en ce que l'actionnement de l'émetteur (20) à portée du récepteur (30) resynchronisera la cadence des changements de code dans l'émetteur (20) et le récepteur (30).

3. Système conformément à la revendication 1 ou à la revendication 2, caractérisé en ce qu'un moyen est fourni pour produire un signal de resynchronisation pour resynchroniser le codage dans l'émetteur (20) et le récepteur (30) quand le synchronisme est perdu.

4. Système conformément à la revendication 3, caractérisé en ce que le moyen de resynchronisation est actionné par la fermeture d'un couvercle de compartiment de pile (42) sur l'émetteur (20).

5. Système conformément à l'une quelconque des revendications précédentes, caractérisé en ce qu'un moyen de cadencement (25,33) est fourni dans chaque émetteur (20) et récepteur (30) pour fournir une précision de cadencement commune à l'émetteur (20) et au récepteur (30).

6. Système conformément à l'une quelconque des revendications précédentes, caractérisé en ce que le générateur de codes dans au moins l'un de l'émetteur (20) et du récepteur (30) est un générateur de codes brassés (26,34) ou un dispositif de cryptage.

7. Système conformément à l'une quelconque des revendications 1 à 6, caractérisé en ce que l'émetteur (20) est un module enfichable.

8. Système conformément à l une quelconque des revendications 1 à 10, caractérisé en ce que le signal émis comporte une partie (53) qui fournit des changements de code à l'intérieur desdits intervalles à des moments déterminés.

9. Système conformément à la revendication 8, caractérisé en ce la partie (53) fournit des changements de code à intervalles réguliers.

10. Système de sécurité de voiture comprenant un dispositif de sécurité, un émetteur (20) pour émettre des signaux de commande, l'émetteur (20) comportant un moyen générateur de codes (26) fonctionnant pour fournir un code formant au moins une partie dudit signal émis, le code étant automatiquement modifiable à intervalles, et un récepteur (30) qui reçoit le signal émis et force le fonctionnement du dispositif de sécurité, le récepteur (30) comportant un moyen de génération de codes (34) fonctionnant pour fournir un code associé ou lié au code émis pour faciliter le fonctionnement du dispositif de sécurité, le code dans le récepteur (30) étant automatiquement modifiable à intervalles sensiblement en synchronisme avec la cadence de changements de code dans l'émetteur (20), caractérisé en ce que l'émetteur (20) et le récepteur (30) sont disposés de telle sorte que l'un d'eux puisse communiquer à l'autre la longueur desdits intervalles à utiliser.

11. Système conformément à la revendication 10, dans lequel la longueur desdits intervalles varie dans le temps.
